# EUROPEAN PATENT APPLICATION

(11) **EP 2 661 015 A1**
(43) Date of publication of application: **06.11.2013**
(21) Application number: 11853155.7
(22) Date of filing: 24.03.2011
(51) Int. Cl.: H04L 12/24, H04L 12/26

(54) **METHOD AND SYSTEM FOR DETECTING SIGNAL DEGRADE (SD) ALARM**

(30) Priority: 29.12.2010 CN 201010612306
(71) Applicant: ZTE Corporation, Shenzhen, Guangdong 518057 (CN)
(72) Inventor: LI, Qin, Shenzhen Guangdong 518057 (CN)
(74) Representative: Zimmermann, Tankred Klaus
(86) International application number: PCT/CN2011/072122
(87) International publication number: WO 2012/088802

(57) **Abstract**

The present invention provides a method and a system for detecting a Signal Degrade (SD) alarm. The method comprises the following steps: a transmitter-side device determines that service traffic transmitted from a first port of the transmitter-side device to a second port of a receiver-side device is lower than a first preset threshold; the transmitter-side device transmits background traffic to the second port through the first port; and the receiver-side device performs an SD alarm detection according to traffic received on the second port.. The present invention achieves the effect of reducing SD alarm vibration.

## Description

### Technical Field of the Invention

The present invention relates to communication field, and in particular to a method and a system for detecting a Signal Degrade (SD) alarm.

### Background of the Invention

With the trend of Internet Protocol (IP) of telecommunication services, services supported by transport network have been trending away from Time-division Multiplexing (TDM) technology towards the IP technology; neither the conventional Synchronous Digital Hierarchy (SDH) transport network technology oriented to the TDM service nor the SDH-based Multi-Service Transfer Platform (MSTP) technology can meet the requirements of applications mainly for packet data service. However, the future market needs a packet transport technology which can effectively transmit packet data service, and meanwhile can provide telecommunication level Operation Administration and Maintenance (OAM) and protection; driven by such demand, packet transfer network becomes a new choice. Currently, there are mainly two Packet Transfer Networks (PTNs) entering standards organizations and being deployed in telecommunication networks, namely, Multi Protocol Label Switching Transmission (T-MPLS) network and Provider Backbone Transport (PBT) network, in which the T-MPLS technology has gained an advantage in the standardization process and has evolved into MPLS-TP.

With the IP trend of telecommunication services, the services supported by transport network have been changing from the TDM technology to the IP technology. In the future market, services are not simple voice only, and new services such as video, Internet and online game would emerge in endlessly. Each type of service varies widely from another in the requirement on Quality of Service (QoS); and real-time services such as voice and video call present a high demand on transfer delay and packet loss rate, requiring equipment to perform protection switching when signal is degraded. With the commercial use of PTN equipment, all operators at home and abroad have presented a demand on the SD switching with various protection configurations so as to ensure the QoS of network to a greater extent.

SD refers to signal attenuation appearing in optical transmission network, and specifically refers to partial loss of content that does not cause total interrupt of service but causes discontinuity or blur of real-time services such as voice and video call and brings a bad experience to users. With the development of 3G construction, each operator presents a higher demand on equipment, requiring the equipment to support SD protection switching, that is, to perform protection switching when it is detected that the SD is exceeding the range that the user can accept so as to switch the service to a normal protection path, thereby ensuring the QoS of transmission.

The existing detection of SD mainly is to take statistics of lost packets on links; and including two available methods below: 1) the OAM function adopted by the PTN which from the technology of T-MPLS/MPLS-TP/PBT etc., it can provide a powerful performance monitoring function---Loss Measurement (LM) and thus can detect the lost packet on each layer respectively; 2) a port counts the number of error packets received thereon.

However, the above two methods have a defect when configuring 1:1 protection or ring protection; and the defect of the two methods is described below.
1). LM performance statistics of OAM: the LM performance statistics on T-MPLS Path (or TMP for short) layer is based on tunnel; therefore, after switching, no matter whether the service is still on the same physical path or not, the LM performance statistics of TMP can not take statistics of lost packets for a current tunnel has no service after switching, thus, SD alarm can not be detected.
2) Performance statistics of the port: this method has certain improvement over the tunnel based LM performance statistics, but still can not solve the above problem thoroughly. If both working tunnel and protection tunnel are on the same physical path, the performance statistics of port T-MPLS Session (or TMS for short) can be used to detect SD; then, the SD alarm of the TMS is transmitted to the TMP by means of various methods; however, if the working tunnel and the protection tunnel are on different ports, SD alarm vibration still appears after switching.

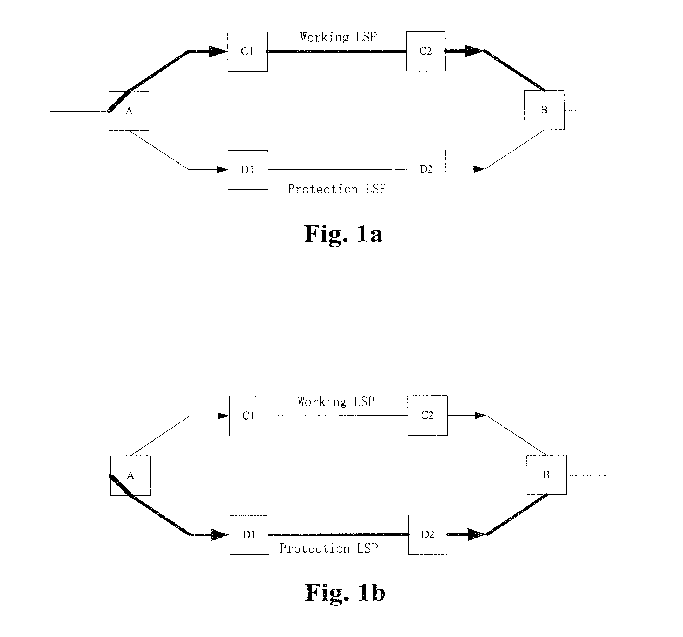

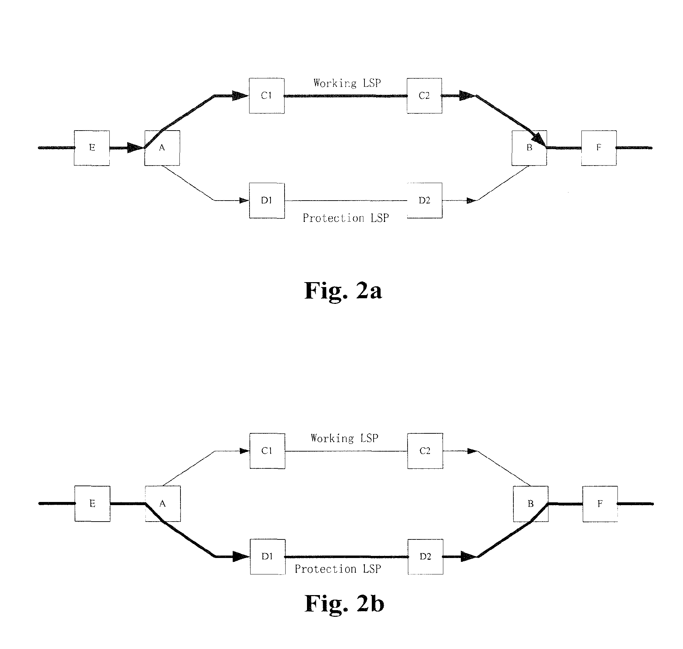

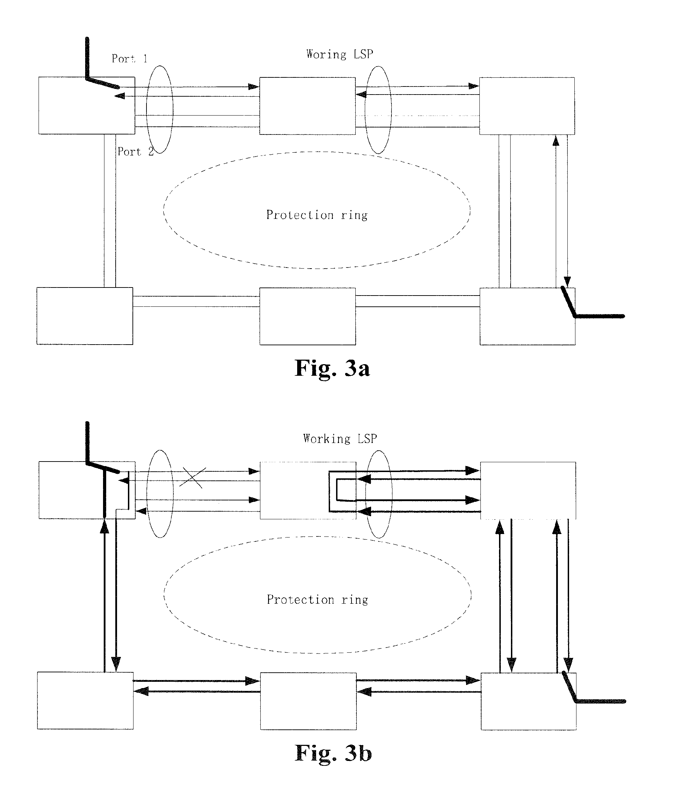

Fig. 1a and Fig. 1b show the processing of services in 1:1 path protection switching; Fig. 2a and Fig. 2b show the processing of services in 1:1 subnet protection switching; Fig. 3a and Fig. 3b show the processing of services in ring protection switching. As shown from Fig. 1 a to Fig. 3b, after SD protection switching occurs, the service would be switched to the protection tunnel; generally, in order to ensure the reliability of service, the working tunnel and the protection tunnel pass through different physical ports; after the protection switching occurs, the physical link on which the working path is located probably has no service; at this moment, lost packet can not be counted and the equipment of the working path considers that the SD alarm disappears, then the service is switched back to the working path; consequently, unnecessary switching impact is caused on the service.

### Summary of the Invention

The present invention is to provide a scheme preventing SD alarm vibration, so as to solve the problem of SD alarm vibration.

According to one aspect of the present invention, a method for detecting an SD alarm is provided, including: a transmitter-side device determining that service traffic transmitted from a first port of the transmitter-side device to a second port of a receiver-side device is lower than a first preset threshold; the transmitter-side device transmitting background traffic to the second port through the first port; and the receiver-side device performing an SD alarm detection according to traffic received on the second port.

The receiver-side device performing the SD alarm detection according to the traffic received on the second port includes: Transport Multi-Protocol Label Switching Operation Administration and Maintenance (TMS OAM) of the receiver-side device acquiring a performance value of the second port according to the traffic received on the second port; the receiver-side device performing the SD alarm detection according to the performance value.
the receiver-side device performing the SD alarm detection according to the performance value includes: the TMS OAM determining that the SD alarm is detected according to the performance value, and if ring protection is configured on the TMS OAM, performing SD switching of a ring network; the TMS OAM transmitting the detected SD alarm to a Transport Multi-Protocol Label Switching Path (TMP) layer corresponding to the TMS OAM; and the TMS layer performing SD switching if a protection group is configured on the TMP layer.

After the transmitter-side device transmitting the background traffic to the second port through the first port, the method further includes: the receiver-side device reporting the traffic other than the background traffic to a user as a port performance value.

After the transmitter-side device transmitting the background traffic to the second port through the first port, the method further includes: he transmitter-side device determining that the service traffic transmitted from the first port to the second port is higher than a second preset threshold; and the transmitter-side device stopping transmitting the background traffic.

Before the transmitter-side device determining that the service traffic transmitted from the first port of the transmitter-side device to the second port of the receiver-side device is lower than the first preset threshold, the method further includes: the transmitter-side device determining that the SD switching is switched to a protection tunnel of a tunnel in which the transmitter-side device is located; and the transmitter-side device starting a timer to query regularly the service traffic transmitted from the first port.

The background traffic is an Ethernet message, of which destination Media Access Control (MAC) is 0 and content is 0.

According to another aspect of the present invention, a system for detecting an SD alarm is provided, including: a the transmitter-side device, configured to transmit background traffic to a second port through a first port, when determining that service traffic transmitted from the first port of the transmitter-side device to the second port of a receiver-side device is lower than a first preset threshold; and the receiver-side device, configured to perform an SD alarm detection according to traffic received on the second port.

TMS OAM of the receiver-side device is configured to acquire a performance value of the second port according to the traffic received on the second port; and the receiver-side device is further configured to perform the SD alarm detection according to the performance value.

The TMS OAM is configured to determine that the SD alarm is detected according to the performance value, to perform SD switching of a ring network if ring protection is configured on the TMS OAM, and to transmit the detected SD alarm to a TMP layer corresponding to the TMS OAM; and the TMP layer is configured to perform the SD switching if a protection group is configured on the TMP layer.

Through the present invention, background traffic is transmitted when the port has small traffic and the SD alarm can not be detected accurately; the method of the detection of SD alarm through the background traffic and service traffic solves the problem of SD alarm vibration appearing during SD protection switching in conventional art; thus, the effect of reducing SD alarm vibration is achieved.

### Brief Description of the Drawings

Drawings, provided for further understanding of the present invention and forming a part of the specification, are used to explain the present invention together with embodiments of the present invention rather than to limit the present invention, wherein:
Fig. 1a shows a schematic diagram of the service traffic flow direction (that is, normal service traffic flow direction) before 1:1 path protection switching according to the conventional art;
Fig. 1b shows a schematic diagram of the service traffic flow direction after 1:1 path protection switching according to the conventional art;
Fig. 2a shows a schematic diagram of the service traffic flow direction (that is, normal service traffic flow direction) before 1:1 subnet protection switching according to the conventional art;
Fig. 2b shows a schematic diagram of the service traffic flow direction after 1:1 subnet protection switching according to the conventional art;
Fig. 3a shows a schematic diagram of the service traffic flow direction (that is, normal service traffic flow direction) before ring protection switching according to the conventional art;
Fig. 3b shows a schematic diagram of the service traffic flow direction after ring protection switching according to the conventional art;
Fig. 4 shows a flowchart of a method for detecting an SD alarm according to the embodiment of the present invention;
Fig. 5 shows a schematic diagram of the process in the transmitting direction according to the embodiment of the present invention;
Fig. 6 shows a schematic diagram of the process in the receiving direction according to the embodiment of the present invention; and
Fig. 7 shows a structure diagram of a system for detecting an SD alarm according to the embodiment of the present invention.

### Detailed Description of the Embodiments

The preferred embodiments are described in conjunction with the drawings as follows. It shall be understood that the embodiments of the present application and the features of the embodiments can be combined with each other if there is no conflict.

### Embodiment 1

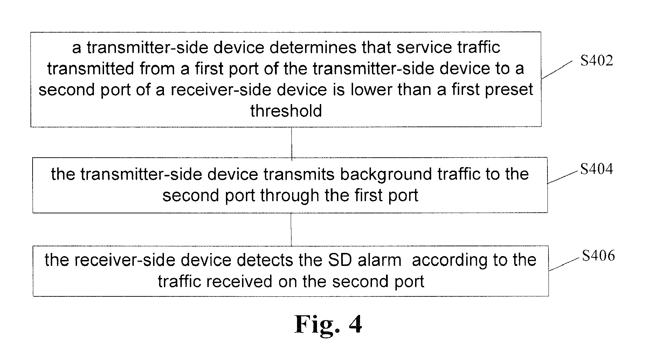

This embodiment of the present invention provides a method for detecting an SD alarm, which can be applied to a PTN. Fig. 4 shows a flowchart of the method for detecting an SD alarm according to the embodiment of the present invention; as shown in Fig. 4, the method includes the following steps.

Step S402: a transmitter-side device determines that service traffic transmitted from a first port of the transmitter-side device to a second port of a receiver-side device is lower than a first preset threshold, for example, the traffic, which is transmitted by the first port of the transmitter-side device in the transmitting direction, can be detected regularly by a timer; if the traffic is lower than the first preset threshold, Step 404 is executed.

Step S404: the transmitter-side device transmits background traffic to the second port through the first port.

Step S406: the receiver-side device detects the SD alarm and triggers SD protection switching procedure according to the traffic received on the second port.

In this embodiment, the background traffic is transmitted when the port has small traffic; the detection of SD alarm is implemented through the background traffic and service traffic, so as to achieve SD switching. This embodiment solves the problem of SD alarm vibration of Automatic Protection Switch (APS) caused by the detection of SD alarm disappearance on the working path which has no service after the service is switched to the protection path during the SD protection switching, and thus reduces the impact on services from protection switching caused by SD alarm vibration.

In a preferred embodiment of the embodiments of the present invention, the receiver-side device performs SD alarm detection according to the traffic received on the second port might include: TMS OAM of the receiver-side device acquires a performance value of the second port according to the traffic received on the second port; then the receiver-side device performs the SD alarm detection according to the performance value.

In the above, the receiver-side device performs the SD alarm detection according to the performance value might include: the TMS OAM determines the SD alarm is detected according to the performance value, performs SD switching of a ring network if a ring protection is configured on the TMS OAM, and transmits the detected SD alarm to a TMP layer corresponding to the TMS OAM; then, the TMP layer performs the SD switching if a protection group is configured on the TMP layer.

In another preferred embodiment of the present invention, after the transmitter-side device transmits the background traffic to the second port through the first port, the receiver-side device may report the traffic other than the background traffic to a user as the performance value of the port; in this way, the user can conduct performance analysis according to the traffic other than the background traffic.

In a third preferred embodiment of the present invention, after the transmitter-side device transmits the background traffic to the second port through the first port, if the transmitter-side device determines that the service traffic transmitted from the first port to the second port is higher than a second preset threshold (the preset second threshold is sufficient to detect the SD alarm), the transmitter-side device stops transmitting the background traffic.

In a fourth preferred embodiment of the present invention, before the transmitter-side device determines that the service traffic transmitted from the first port of the transmitter-side device to the second port of the receiver-side device is lower than the first preset threshold, the transmitter-side device may determine that the SD switching is switched to a protection tunnel of a tunnel in which the transmitter-side device is located and start a timer to query regularly the service traffic in the transmitting direction of the first port.

Preferably, the background traffic is an Ethernet message, of which destination Media Access Control (MAC) is 0 and content is 0.

### Embodiment 2

This embodiment aims at solving the problem of SD alarm vibration of APS caused by the disappearance of the SD alarm on the working path which has no service (that is, alarm disappearance) after the service is switched to the protection path upon the detection of SD alarm, while configuring 1:1 path protection, 1:1 subnet protection and ring protection in PTN equipment, thereby guaranteeing the quality of network transmission and improving the happiness of users on network quality.

In this embodiment, the process for preventing SD alarm vibration includes the following steps:
Step 1: Setting the threshold values for transmitting background traffic, including a high threshold and a low threshold.
   In the process of detecting the SD alarm, the transmission of background traffic mainly is to prevent that the packet loss rate cannot be calculated as lost packets cannot be counted, which is caused by no service traffic on the original path after the protection switching, and thus to prevent the impossibility of detecting SD alarm. However, this process should not impact the service. In order to avoid the condition of link congestion and service packet loss caused by heavy background traffic, it is needed to set a current traffic threshold value for transmitting background traffic; if the current traffic is lower than the lower threshold, that is, the current traffic probably is insufficient to detect the SD alarm precisely, the background traffic is transmitted; if the current traffic is higher than the high threshold, that is, the current traffic is sufficient to well detect the SD alarm, the background traffic is stopped.
Step 2: Configuring the TMS OAM to acquire the performance value of a port.
   PTN protection is tunnel-based, that is, after switching, the service on the working tunnel is switched to the protection tunnel; therefore, no matter the 1:1 linear protection or ring protection, there is no service on the working path after SD switching. Thus, the tunnel-based LM performance statistics of TMP has a defect, that is, the packet loss on the tunnel can not be detected after switching; however, at this moment, the performance statistics can be implemented by configuring TMS OAM, wherein the TMS is the port-based OAM, and the alarm detected by the TMS can be transmitted to the corresponding TMP layer through various methods (for example, the method described in the patent application entitled "A method for detecting signal degrade defect" of which the application number is CN200910110069.9, and the method described in the patent application entitled "LSP linear protection switching method in PTN" of which the application number is CN200910259516.7); further, ring protection is a TMS-based switch, thus, configuring TMS OAM in a protection switching environment to detect lost packet can apply to linear protection and ring protection simultaneously.
Step 3: starting a timer to regularly query port traffic, after enabling the SD detection and the SD switching.
   After the SD detection function is enabled, software starts the 1 s timer to traverse the currently configured TMS once, query the current traffic of the corresponding port, acquire the number of bytes from hardware and calculate specific traffic.
Step 4: if the port traffic is lower than a certain value (that is, low threshold), configuring the hardware to transmit an invalid message; if the port traffic is higher than a certain value (that is, high threshold), the invalid message is stopped transmitting.
   1) If the current port traffic is lower than the low threshold for transmitting background traffic, the background traffic that should be transmitted is calculated, and the background traffic is converted into the number of bytes; then, the hardware is configured to transmit to this port a 64-byte Ethernet (Eth) message of lowest priority with destination MAC of all zeros. The transmitted traffic must not affect the current service, and the opposite end must not forward the message after receiving this message.
   2) If the current port traffic is higher than a certain value (that is, high threshold), the background traffic is stopped transmitting.

   The background traffic is transmitted under the premise of not affecting the current service; if the current port traffic is sufficient to calculate the packet loss rate, the background traffic should not be transmitted. Thus, if the detected traffic is higher than the high threshold, the hardware is configured to stop transmitting the background traffic. The specific port traffic threshold value is related to the specific configuration.
Step 5: Processing the the invalid message transmitted by the hardware.
   When the background traffic message transmitted from the hardware is received, it is needed to perform the following processes.
   1) The background traffic message can participate in the packet loss rate statistics for detecting the SD alarm; when reading the performance value to detect the SD alarm, it must read the performance value including the number of background traffic messages.
   2) The background traffic does not affect other current normal services; the background traffic can not be forwarded or can not be terminated. All the received background traffic messages would be discarded.
   3) The background traffic message does not affect the performance statistics of current normal services; the transmitted background traffic message is not what the user needs, thus, the background traffic message should not be counted in the port performance statistics of the user, otherwise, misunderstanding is caused to the user.

Compared with the existing SD switching technology, this embodiment solves the problems of protection switching vibration and the service getting hurted in 1:1 protection and ring protection with the condition of service single transmission, which are caused by that the SD alarm cannot be detected on the working path which has no service after SD switching occurs upon the detection of SD alarm on the working path and thus the service is switched back to the working path, thereby enabling the protection switching to be more stable when SD occurs, guaranteeing transmission quality, improving network performance and satisfying the requirement of operators and users on network transmission quality.

### Embodiment 3

This embodiment illustrates the application of the method described in this embodiment in PTN equipment. The process of SD switching mainly includes the following steps.

The process in the transmitting direction includes:
Step 1: the high threshold and the low threshold for transmitting background traffic are configured.
   According to specific application environment, the low threshold of the current traffic for starting transmitting the background traffic and the high threshold for stopping transmitting the background traffic are set. This embodiment takes the application background that a Gigabit port acts as a Network Node Interface (NNI) port to transmit Ethernet service of hundreds of megabits as an example, wherein the high threshold can be set to 300M, and the low threshold can be set to 100M, that is, if the current service traffic is lower than 100M, the background traffic is transmitted; if the current service traffic is higher than 300M, the background traffic is stopped.
Step 2: the TMS OAM is configured to read packet loss performance statistics from the port.
   TMS Maintenance Entity Group (MEG) is configured in each span of the link and SD detection is enabled, so that the port performance value may be acquired from hardware each second regularly to calculate the packet loss rate, so as to judge whether the SD alarm appears. The configuration of TMS detection mainly is to detect alarm in a ring network and to transmit the SD alarm of TMS to TMP, avoiding that the SD alarm of TMP cannot be detected according to the tunnel-based performance statistics after the protection switching and thus avoiding the SD alarm vibration caused by the tunnel protection switching.
Step 3: the traffic of the port is read regularly.
   The number of bytes of the port, which is in the current transmitting direction, is acquired from a hardware chip regularly by a timer, for the calculation of the current transmitting traffic.
Step 4: it is judged whether the current transmitting traffic of the port is lower than the low threshold, if so, starting transmitting the background traffic.
   It is judged whether the current transmitting traffic of the port is lower than the preset low threshold for transmitting background traffic, if so, FPGA starts transmitting background traffic, wherein the transmitted background traffic must not affect the current service; thus, the traffic can not exceed the maximum traffic of the port but needs to satisfy the condition of detecting SD accurately; therefore, the hardware can be set to transmit a 200M 64-byte Ethernet message with destination MAC of all zeros and content of all zeros.
Step 5: if the current transmitting traffic of the port is higher than the high threshold, the hardware is configured to stop transmitting the background traffic.

It is judged whether the current transmitting traffic of the port is higher than the preset high threshold, if so, it is indicated that the traffic of the current link is sufficient to detect SD, and the hardware can be configured to stop transmitting the background traffic.

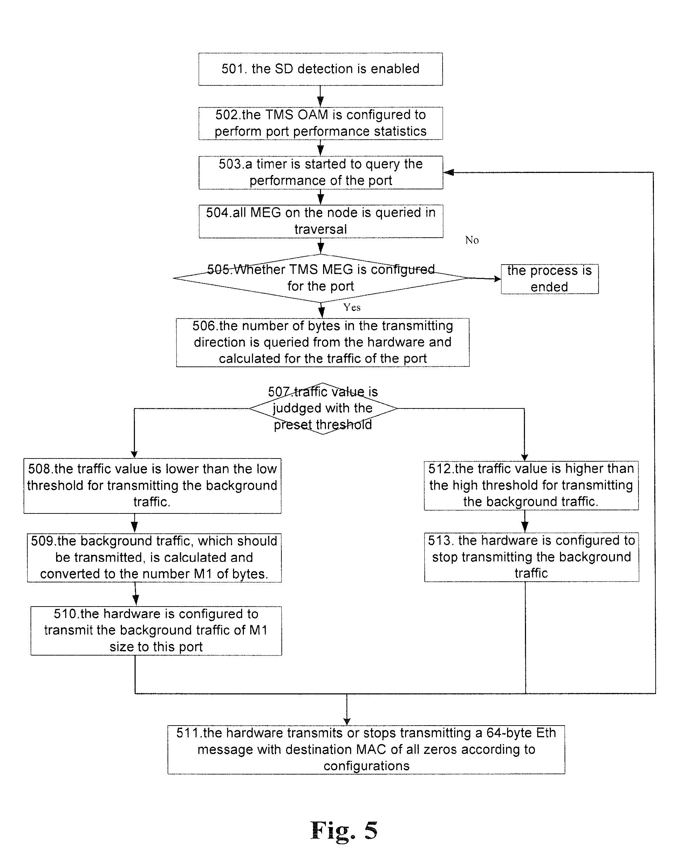

Fig. 5 shows a schematic diagram of the process in the transmitting direction according to the embodiment of the present invention; as shown in Fig. 5, the process includes the following steps.
Step 501: the SD detection is enabled.
Step 502: the TMS OAM is configured to perform port performance statistics.
Step 503: a timer is started to query the performance of the port.
Step 504: all MEG on the node is queried in traversal
Step 505: it is judged whether TMS MEG is configured for the port; if so, performing the Step 506; otherwise, it is indicated that this port does not need to detect SD, and exiting directly.
Step 506: the number of bytes in the transmitting direction is queried from the hardware and calculated for the traffic of the port.
Step 507: traffic value is judged with the preset threshold.
Step 508: it is determined that the traffic value in the Step 507 is lower than the low threshold for transmitting the background traffic.
Step 509: the background traffic, which should be transmitted, is calculated and converted to the number M1 of bytes.
Step 510: the hardware is configured to transmit the background traffic of M1 size to this port; then, executing the Step 511 and returning to Step 503.
Step 511: the hardware transmits or stops transmitting a 64-byte Eth message with destination MAC of all zeros according to configurations.
Step 512: it is determined that the traffic in Step 507 is higher than the high threshold for transmitting the background traffic.
Step 513: the hardware is configured to stop transmitting the background traffic; then, the Step 511 is performed and the Step 503 is returned.

The process in the receiving direction includes the following.

In the receiving direction, the process mainly includes distinguishing and taking statistics of error packets, and taking separate statistics of meaningless background traffic messages transmitted automatically by equipment, with the purpose of deducting the statistics of background traffic when reporting port performance, so as to avoid abnormal statistics of port performance due to the transmission of background traffic.
Step 1: message error correction is performed; if the error is a Cyclic Redundancy Code (CRC) error, it is indicated that the message should be discarded and this message is counted as the received error packets of which the number is represented by M3; if the message has the lowest priority and the destination MAC of all zeros, it is considered that this message is the background traffic automatically transmitted by the hardware but not a data message, the number of received error messages in background traffic is counted as M4 and the error message would be discarded.
Step 2: if there is no CRC error, it is considered that a correct message is received; then, this message together with data messages is counted as the received correct messages of which the number is represented by M1, and the number of background traffic messages is counted separately as M2; it is judged whether this message is a background traffic message automatically transmitted by equipment according to the destination MAC; if so, this message should be discarded, and other normal services messages should be forwarded or be terminated.
Step 3: after SD detection is enabled, the performance statistics including the background traffic message is read regularly, that is, the total number M1 of received correct messages and the total number M3 of received error messages including background traffic are used for, the SD alarm calculation, wherein the specific process can be referred to other patents, for example, the method described in the patent application entitled "A method for detecting signal degrade defect" of which the application number is CN200910110069.9, and the method described in the patent application entitled "LSP linear protection switching method in PTN" of which the application number is CN200910259516.7.
Step 4: the performance value statistics subtracted by the background traffic part is reported to an alarm performance module, serving it as the performance of the port, that is to say, the value of (M1-M2) and the value of (M3-M4) are reported, so that the performance value obtained by equipment does not contain the background traffic part.

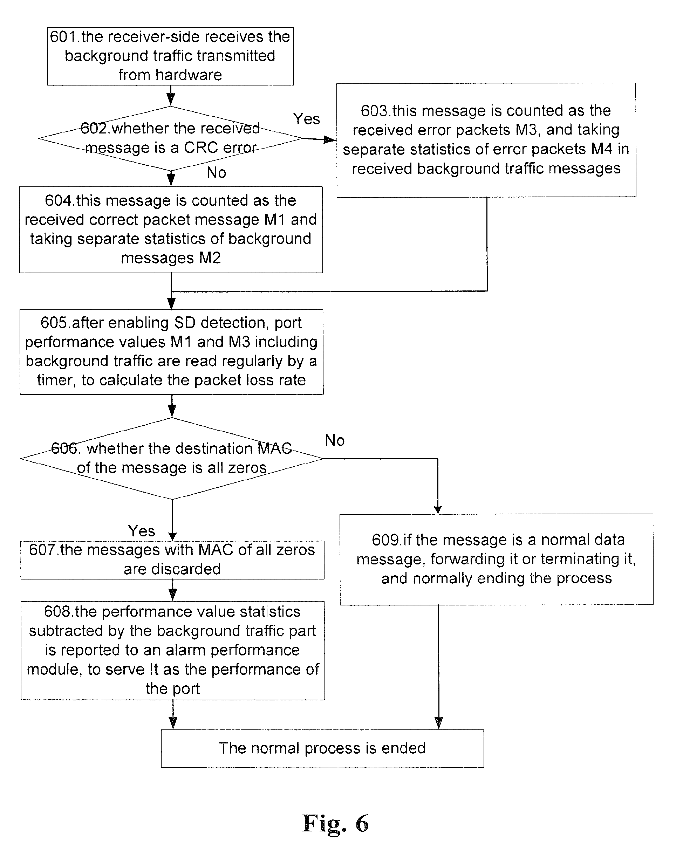

Fig. 6 shows a schematic diagram of the process in the receiving direction according to the embodiment of the present invention; as shown in Fig. 6, the process includes the following.
Step 601: the receiver-side receives the background traffic transmitted from hardware.
Step 602: it is judged whether the received message is a CRC error; if so, executing Step 603; otherwise, executing Step 604.
Step 603: this message is counted as the received error packets M3, and taking separate statistics of error packets M4 in received background traffic messages.
Step 604: this message is counted as the received correct packet message M1 and taking separate statistics of background messages M2.
Step 605: after enabling SD detection, port performance values M1 and M3 including background traffic are read regularly by a timer, to calculate the packet loss rate.
Step 606: it is judged whether the destination MAC of the message is all zeros; if so, Step 607 is executed; otherwise, Step 609 is executed.
Step 607: the messages with MAC of all zeros are discarded.
Step 608: the performance value statistics subtracted by the background traffic part is reported to an alarm performance module, to serve it as the performance of the port; that is to say, reporting the value of (M1-M2) and the value of (M3-M4); then, normally ending the process.
Step 609: if the message is a normal data message, forwarding it or terminating it, and normally ending the process.

### Embodiment 4

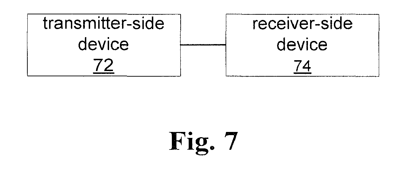

This embodiment of the present invention also provides a system for detecting an SD alarm, to implement the methods described in Embodiment 1 to Embodiment 3. Fig. 7 shows a structure diagram of a system for detecting an SD alarm according to the embodiment of the present invention. As shown in Fig. 7, the system includes: a transmitter-side device 72, configured to transmit background traffic to a second port of a receiver-side device through a first port of the transmitter-side device, when determining that the service traffic transmitted from the first port to the second port is lower than a first preset threshold; and a receiver-side device 74, coupled to the transmitter-side device 72 and configured to perform an SD alarm detection according to the traffic received on the second port.

Preferably, TMS OAM of the receiver-side device is configured to acquire a performance value of the second port according to the traffic received on the second port; and the receiver-side device is further configured to perform the SD alarm detection according to the performance value.

Preferably, the TMS OAM is configured to determine that the SD alarm is detected according to the performance value, to perform SD switching of a ring network if the ring protection is configured on the TMS OAM, and to transmit the detected SD alarm to a TMP layer corresponding to the TMS OAM; and the TMP layer is configured to perform SD switching if a protection group is configured on the TMP layer.

This embodiment can reduce the impact on services from protection switching caused by SD alarm vibration, guarantee the quality of network transmission and improve the satisfaction of users on network quality.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the present invention are all included in the scope of the protection of the present invention.

## Claims

1. A method for detecting a Signal Degrade (SD) alarm, **characterized by** comprising:
a transmitter-side device determining that service traffic transmitted from a first port of the transmitter-side device to a second port of a receiver-side device is lower than a first preset threshold;
the transmitter-side device transmitting background traffic to the second port through the first port; and
the receiver-side device performing an SD alarm detection according to traffic received on the second port.

2. The method according to claim 1, **characterized in that** the receiver-side device performing the SD alarm detection according to the traffic received on the second port comprises:
Transport Multi-Protocol Label Switching Operation Administration and Maintenance (TMS OAM) of the receiver-side device acquiring a performance value of the second port according to the traffic received on the second port; and
the receiver-side device performing the SD alarm detection according to the performance value.

3. The method according to claim 2, **characterized in that** the receiver-side device performing the SD alarm detection according to the performance value comprises:
the TMS OAM determining that the SD alarm is detected according to the performance value, and if ring protection is configured on the TMS OAM, performing SD switching of a ring network;
the TMS OAM transmitting the detected SD alarm to a Transport Multi-Protocol Label Switching Path (TMP) layer corresponding to the TMS OAM; and
the TMP layer performing the SD switching if a protection group is configured on the TMP layer.

4. The method according to claim 1, **characterized in that** after the transmitter-side device transmitting the background traffic to the second port through the first port, the method further comprises:
the receiver-side device reporting the traffic other than the background traffic to a user as the performance value of the port.

5. The method according to claim 1, **characterized in that** after the transmitter-side device transmitting the background traffic to the second port through the first port, the method further comprises:
the transmitter-side device determining that the service traffic transmitted from the first port to the second port is higher than a second preset threshold; and
the transmitter-side device stopping transmitting the background traffic.

6. The method according to claim 1, **characterized in that** before the transmitter-side device determining that the service traffic transmitted from the first port of the transmitter-side device to the second port of the receiver-side device is lower than the first preset threshold, the method further comprises:
the transmitter-side device determining that the SD switching is switched to a protection tunnel of a tunnel in which the transmitter-side device is located; and
the transmitter-side device starting a timer to query regularly the service traffic transmitted from the first port.

7. The method according to any one of claims 1 to 6, **characterized in that** the background traffic is an Ethernet message, of which destination Media Access Control (MAC) is 0 and content is 0.

8. A system for detecting a Signal Degrade (SD) alarm, **characterized by** comprising:
a transmitter-side device, configured to transmit background traffic to a second port through a first port when determining that service traffic transmitted from the first port of the transmitter-side device to the second port of a receiver-side device is lower than a first preset threshold; and
the receiver-side device, configured to perform an SD alarm detection according to traffic received on the second port.

9. The system according to claim 8, **characterized in that**
Transport Multi-Protocol Label Switching Operation Administration and Maintenance (TMS OAM) of the receiver-side device is configured to acquire a performance value of the second port according to the traffic received on the second port; and
the receiver-side device is further configured to perform the SD alarm detection according to the performance value.

10. The system according to claim 9, **characterized in that**
the TMS OAM is configured to determine that the SD alarm is detected according to the performance value, to perform the SD switching of a ring network if ring protection is configured on the TMS OAM, and to transmit the detected SD alarm to a Transport Multi-Protocol Label Switching Path (TMP) layer corresponding to the TMS OAM; and
the TMP layer is configured to perform SD switching if a protection group is configured on the TMP layer.
